# EUROPÄISCHE PATENTANMELDUNG

(11) **EP 1 609 635 A1**
(43) Veröffentlichungstag der Anmeldung: **28.12.2005**
(21) Anmeldenummer: 05013568.0
(22) Anmeldetag: 23.06.2005
(51) Int. Cl.: B60G 17/052, B60G 11/30

(54) **Kraftfahrzeug mit einer Druckkammer in einem Hohlraum der Kraftfahrzeugkarosserie**

(30) Priorität: 24.06.2004 DE 102004030469
(71) Anmelder: GM Global Technology Operations, Inc., Detroit, MI 48265-3000 (US)
(72) Erfinder: Siebeneick, Jürgen, 55430 Oberwesel (DE)
(74) Vertreter: Daniel, Ulrich W.P.

(57) **Zusammenfassung**

Bei einem Kraftfahrzeug ist eine Druckkammer (9) eines zuschaltbaren oder dauerhaft verbundenen Zusatzvolumens einer Luftfeder (2) in einem Hohlraum (12) einer Kraftfahrzeugkarosserie (1) angeordnet. Der Hohlraum (12) der Kraftfahrzeugkarosserie (1) ist gegenüber der Umgebung abgedichtet und mit einer Leitung (8) mit der Luftfeder (2) verbunden. Hierdurch benötigt die Luftfeder (2) nur einen besonders geringen Bauraum im Kraftfahrzeug.

## Beschreibung

Die Erfindung betrifft ein Kraftfahrzeug mit einer Kraftfahrzeugkarosserie, mit einem eine Luftfeder aufweisenden Federelement und mit zumindest einer Druckkammer der Luftfeder.

Luftfedern werden bei heutigen Kraftfahrzeugen häufig eingesetzt und sind beispielsweise aus der DE 344 45 984 A1 bekannt. Ein Federvolumen der Luftfeder des bekannten Kraftfahrzeuges steht mit einem oder mehreren Zusatzvolumen in Wirkverbindung und wird von einer Rollbalgmembran begrenzt. Die Rollbalgmembran dichtet gegenüber einem, mit einem Rad verbundenen Führungsrohr und einem an der Kraftfahrzeugkarosserie befestigten zylindrischen Teil.

Nachteilig bei dem bekannten Kraftfahrzeug ist, dass die Druckkammern einen sehr großen Bauraum benötigen. Ein großer Bauraum steht bei heutigen, meist sehr kompakt aufgebauten Kraftfahrzeugen jedoch nicht zur Verfügung.

Der Erfindung liegt das Problem zugrunde, ein Kraftfahrzeug der eingangs genannten Art so zu gestalten, dass die Druckkammer oder die Druckkammern einen möglichst geringen Bauraum beanspruchen.

Dieses Problem wird erfindungsgemäß dadurch gelöst, dass die Druckkammer in einem Hohlraum der Kraftfahrzeugkarosserie angeordnet ist.

Durch diese Gestaltung lässt sich die Druckkammer in einem ohnehin vorhandenen Hohlraum des erfindungsgemäßen Kraftfahrzeuges integrieren. Damit wird vermieden, dass für die Druckkammer oder die Druckkammern der Luftfeder separater Bauraum bereit gehalten werden muss. Hierdurch beanspruchen die Druckkammer oder die Druckkammern einen besonders geringen Bauraum in dem erfindungsgemäßen Kraftfahrzeug.

Die Druckkammer gestaltet sich gemäß einer vorteilhaften Weiterbildung der Erfindung konstruktiv besonders einfach, wenn die Druckkammer in einem luftdichten Bauteil der Kraftfahrzeugkarosserie angeordnet ist. Durch diese Gestaltung lässt sich die Luftfeder im einfachsten Fall an das luftdichte Bauteil der Kraftfahrzeugkarosserie anschließen und damit der in der Kraftfahrzeugkarosserie ohnehin vorhandene Hohlraum als Druckkammer nutzen.

Meist ist jedoch nicht zuverlässig gewährleistet, dass in den Bauteilen der Kraftfahrzeugkarosserie vorhandene Hohlräume zuverlässig gasdicht sind. Dann lässt sich ein Entweichen von Gas aus der Druckkammer gemäß einer anderen vorteilhaften Weiterbildung der Erfindung zuverlässig vermeiden, wenn ein Gummibalg der Luftfeder in einem Bauteil der Kraftfahrzeugkarosserie angeordnet ist und sich bei Druckbeaufschlagung an den inneren Wänden des Bauteils abstützt.

Bei mehreren Druckkammern der Luftfeder ist eine erste Druckkammer meist unmittelbar an der Luftfeder angeordnet und über eine Leitung mit einer zweiten Druckkammer verbunden. Die zweite Druckkammer hat ein schaltbares Zusatzvolumen. Bei solchen, mehrere Druckkammern aufweisenden Luftfedern erfordern die Druckkammern gemäß einer anderen vorteilhaften Weiterbildung der Erfindung einen besonders geringen baulichen Aufwand, wenn die Druckkammer Teil eines schaltbaren Zusatzvolumens der Luftfeder ist.

Das den Hohlraum der Luftfeder aufweisende Bauteil weist gemäß einer anderen vorteilhaften Weiterbildung der Erfindung eine besonders hohe Stabilität auf, wenn der Hohlraum in einem Rahmen der Kraftfahrzeugkarosserie angeordnet ist. Der Rahmen ist für die Stabilität des Kraftfahrzeuges meist ohnehin sehr stabil gestaltet und vermag den Druck in der Druckkammer daher einfach abzustützen. Beispielsweise kann der Hohlraum in einem Längsträger oder einem Querträger des Rahmens angeordnet sein.

Die Erfindung lässt verschiedene Ausführungsformen zu. Zur weiteren Verdeutlichung ihres Grundprinzips sind mehrere davon in der Zeichnung dargestellt und werden nachfolgend beschrieben. Die Zeichnung zeigt in
- Fig. 1: eine Luftfeder für ein Kraftfahrzeug mit einem in einem Hohlraum der Kraftfahrzeugkarosserie angeordneten Zusatzvolumen,
- Fig. 2: ein in einem Hohlraum der Kraftfahrzeugkarosserie zu montierendes Zusatzvolumen,
- Fig. 3: eine Schnittdarstellung durch ein Bauteil der Kraftfahrzeugkarosserie mit einem Zusatzvolumen.

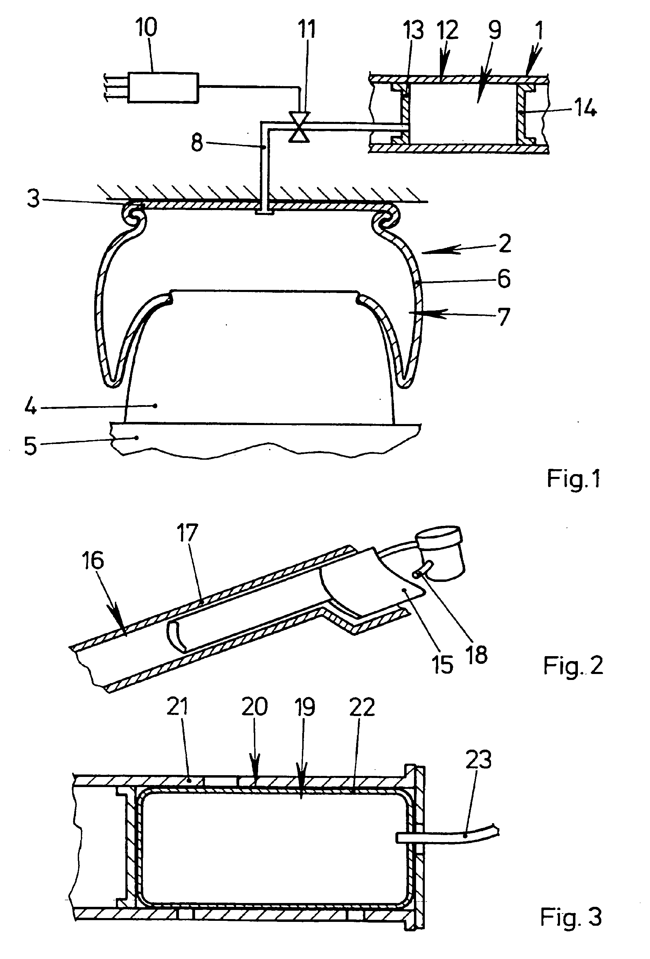

Figur 1 zeigt einen Teilbereich einer Kraftfahrzeugkarosserie 1 eines Kraftfahrzeuges mit einer Luftfeder 2. Die Luftfeder 2 hat einen ersten Flansch 3 zur Befestigung an einem Bauteil der Kraftfahrzeugkarosserie 1 und einen zweiten Flansch 4 zur Befestigung an einem gegenüber der Kraftfahrzeugkarosserie 1 bewegbaren Bauteil 5 einer Achse des Kraftfahrzeuges. Zwischen den beiden Flanschen 3, 4 ist eine von einem Gummibalg 6 begrenzte erste Druckkammer 7 der Luftfeder 2 angeordnet. Die Druckkammer 7 ist über eine Leitung 8 mit einer zweiten Druckkammer 9 verbunden. In der Leitung 8 ist ein von einer Steuerelektronik 10 ansteuerbares Ventil 11 angeordnet. Die zweite Druckkammer 9 hat daher ein zuschaltbares Zusatzvolumen der Luftfeder 2. Die zweite Druckkammer 9 ist in einem Hohlraum 12 der Kraftfahrzeugkarosserie 1 angeordnet. Der Hohlraum 12 der Kraftfahrzeugkarosserie 1 ist gegenüber der Umgebung abgedichtet, so dass die Leitung 8 unmittelbar an die Kraftfahrzeugkarosserie 1 angeschlossen werden kann. Beispielsweise kann der Hohlraum 12 in einem Längsträger oder einem Querträger eines Rahmens des Kraftfahrzeuges angeordnet sein. Zur Abdichtung gegenüber der Umgebung weist die Kraftfahrzeugkarosserie 1 Flansche 13, 14 auf.

Figur 2 zeigt eine Druckkammer 15 in einer weiteren Ausführungsform. Die Druckkammer 15 weist eine zur Montage in einem Hohlraum 16 einer Kraftfahrzeugkarosserie 17 entsprechende Außenkontur auf. Weiterhin hat die Druckkammer 15 einen Anschluss 18 für die in Figur 1 dargestellte Luftfeder 2.

Figur 3 zeigt eine Druckkammer 19 in einer weiteren Ausführungsform, bei der ein Hohlraum 20 einer Kraftfahrzeugkarosserie 21 nicht gegenüber der Umgebung abgedichtet ist. Die Druckkammer 19 hat zur Abdichtung gegenüber der Umgebung einen Gummibalg 22, an dem eine zu der Luftfeder 2 aus Figur 1 führende Leitung 23 angeschlossen ist. Der Gummibalg 22 stützt sich bei Druckbeaufschlagung an den inneren Wänden des Hohlraums 20 der Kraftfahrzeugkarosserie 21 ab.

### Bezugszeichenliste

- 1: Kraftfahrzeugkarosserie
- 2: Luftfeder
- 3, 4: Flansch
- 5: Bauteil
- 6: Gummibalg

- 7: Druckkammer
- 8: Leitung
- 9: Druckkammer
- 10: Steuerelektronik
- 11: Ventil

- 12: Hohlraum
- 13, 14: Flansch
- 15: Druckkammer
- 16: Hohlraum
- 17: Kraftfahrzeugkarosserie

- 18: Anschluss
- 19: Druckkammer
- 20: Hohlraum
- 21: Kraftfahrzeugkarosserie
- 22: Gummibalg

- 23: Leitung

## Patentansprüche

1. Kraftfahrzeug mit einer Kraftfahrzeugkarosserie (1, 17, 21), mit einem eine Luftfeder (2) aufweisenden Federelement und mit zumindest einer Druckkammer (7, 9, 15, 19) der Luftfeder (2), **dadurch gekennzeichnet, dass** die Druckkammer (9, 15, 19) in einem Hohlraum (12, 16, 20) der Kraftfahrzeugkarosserie (1, 17, 21) angeordnet ist.

2. Kraftfahrzeug nach Anspruch 1, **dadurch gekennzeichnet, dass** die Druckkammer (9) in einem luftdichten Bauteil der Kraftfahrzeugkarosserie (1) angeordnet ist.

3. Kraftfahrzeug nach Anspruch 1 oder 2, **dadurch gekennzeichnet, dass** ein Gummibalg (22) der Luftfeder (2) in einem Bauteil der Kraftfahrzeugkarosserie (21) angeordnet ist und sich bei Druckbeaufschlagung an den inneren Wänden des Bauteils abstützt.

4. Kraftfahrzeug nach einem der vorhergehenden Ansprüche, **dadurch gekennzeichnet, dass** die Druckkammer (9, 15, 19) Teil eines schaltbaren Zusatzvolumens der Luftfeder (2) ist.

5. Kraftfahrzeug nach einem der vorhergehenden Ansprüche, **dadurch gekennzeichnet, dass** der Hohlraum (12, 16, 20) in einem Rahmen der Kraftfahrzeugkarosserie (1, 17, 21) angeordnet ist.

6. Kraftfahrzeug nach einem der vorhergehenden Ansprüche, **dadurch gekennzeichnet, dass** die Druckkammer (9, 15, 19) mit der Luftfeder (2) über eine Leitung (8) oder einen Schlauch (23) mit einem geeigneten Querschnitt verbunden ist.
